# FASCICULE DE BREVET EUROPEEN

(11) **EP 2 050 102 B1**
(45) Date de publication et mention de la délivrance du brevet: **24.11.2010**
(21) Numéro de dépôt: 07787958.3
(22) Date de dépôt: 27.07.2007
(51) Int. Cl.: H01B 7/40

(54) **RUBANS SOUPLES DE TRANSFERT D'ENERGIE A AIMANTATION, ET PROCEDE POUR LEUR FABRICATION**
FLEXIBLE MANGETISIERUNGSENERGIE-ÜBERTRAGUNGSBÄNDER UND HERSTELLUNGSPROZESS DAFÜR
FLEXIBLE MAGNETIZATION ENERGY TRANSFER RIBBONS AND PROCESS FOR PRODUCING THEM

(30) Priorité: 27.07.2006 FR 0606877
(43) Date de publication de la demande: 22.04.2009
(73) Titulaire: DELACHAUX S.A., 92230 Gennevilliers (FR)
(72) Inventeur: CORSO, François, F-01510 St Martin de Bavel (FR)
(74) Mandataire: Le Forestier, Eric
(86) Numéro de dépôt international: PCT/EP2007/057741
(87) Numéro de publication internationale: WO 2008/012353

(56) Documents cités:
- FR-A3- 2 865 860
- US-A- 3 229 030

## Description

La présente invention concerne un ruban souple de transfert d'énergie, comportant une bande longitudinale souple de support, présentant une aimantation permanente, et au moins un organe longitudinal souple de transfert d'énergie, retenu par ladite bande au moins à l'encontre de tout déplacement relatif transversal.

On a fréquemment recours à un ruban souple, présentant ou non une aimantation permanente, dans de nombreux domaines techniques et selon divers modes de réalisation, lorsqu'il s'agit d'assurer un transfert d'énergie (y compris bien entendu des signaux) entre des zones localisées respectives de deux solides mobiles l'un par rapport à l'autre.

Différentes structures de rubans souples, de même que différentes applications possibles, sont décrites de façon détaillée dans le préambule et dans la description du document WO 2005/083724 A1 au nom de la Demanderesse, auquel on se reportera en tant que de besoin.

L'utilisation de tels rubans souples connus présente un grand intérêt dans de nombreuses applications, comme mentionné dans le document précité.

Un exemple particulier d'un tel ruban comprend une série d'organes de transfert d'énergie noyés dans une masse d'un agent de fixation tel qu'une résine, l'ensemble ainsi obtenu étant fixé sur une face d'une bande support réalisée par exemple en matière élastomère chargée de particules magnétiques.

Il apparaît que le comportement d'un tel ruban face à des écarts de température pose des problèmes..

Plus précisément, il apparaît que l'ensemble constitué par les organes de transfert d'énergie noyés dans la masse de résine peut se détacher de la bande support, sous l'action de contraintes essentiellement de cisaillement apparaissant entre les deux. Plus précisément, on pense que lorsque le matériau de la bande support, typiquement constitué d'un élastomère du type EPDM (Ethylene Propylene Diene Rubber en terminologie anglo-saxonne) incorporant des grains de ferrite, est exposé à des températures élevées de l'ordre de 50 à 80°C, les molécules de ce matériau se réorganisent pour occasionner un rétreint significatif, non réversible. Dans ces conditions, les forces d'adhésion entre l'ensemble formé des organes noyés dans la résine et la bande support ne sont pas suffisantes pour éviter un décollement entre les deux, et le ruban devient inutilisable.

La présente invention vise à pallier ces inconvénients de l'état de la technique et à proposer un nouveau ruban à bande-support magnétique pour organe(s) de transfert d'énergie ou autres types de liens qui évite ce comportement problématique tout en conservant des matériaux et de processus de fabrication semblables, et donc sans grever le coût de revient du ruban.

On propose à cet effet selon un premier aspect un ruban souple de transfert d'énergie selon la revendication 1.

Selon un deuxième aspect de l'invention, on propose un ruban souple de transfert d'énergie selon la revendication 2.

Certains aspects préférés mais non limitatifs de ces rubans sont définis ci-dessous :
* le matériau d'enrobage est une résine organique.
* le matériau d'enrobage adhère directement sur la bande aimantée, ou bien est solidarisé à la bande aimantée à l'aide d'un adhésif.
* la bande aimantée est constituée par une matrice de caoutchouc Ethylène Propylène Diène (EPDM) dans laquelle sont noyés des grains de ferrite.
* le ruban comprend une bande aimantée de part et d'autre du matériau d'enrobage abritant le ou les organes de transfert.
* les tronçons d'une bande aimantée sont décalés par rapport aux tronçons de la bande aimantée opposée (3), de manière à ce que leurs interruptions mutuelles ne coïncident pas.
* les tronçons ont une longueur comprise entre environ 3 mm et environ 15 mm, préférentiellement entre environ 4 mm et environ 7 mm.

Enfin on propose selon un troisième aspect de l'invention un procédé de fabrication d'un ruban souple de transfert d'énergie, **caractérisé en ce qu**'il comprend les étapes suivante :
- prévoir une bande aimantée continue constituée par un matériau élastomère formant matrice dans laquelle sont noyées des particules lui communiquant une aimantation permanente orientée dans le sens de l'épaisseur de ladite bande,
- fixer le long de ladite bande au moins un organe de transfert d'énergie à l'aide d'un matériau d'enrobage dans lequel le ou chaque organe de transfert d'énergie est noyé et adhérant à la bande aimantée,
- pratiquer dans ladite bande aimantée des entailles formant amorces de rupture espacées de distances telles que des phénomènes de changement dimensionnel induits dans la bande aimantée notamment sous l'effet d'écarts de température induisent entre la bande aimantée et le matériau d'enrobage des contraintes suffisamment fortes pour provoquer la rupture de la bande au niveau desdites amorces de rupture et former des tronçons de bande mais suffisamment faibles pour éviter de fragiliser l'adhésion entre ladite bande aimantée et ledit matériau d'enrobage.

Avantageusement, le procédé comprend une étape ultérieure consistant à exposer l'ensemble simultanément à une température conduisant à un phénomène de changement dimensionnel et à des contraintes de flexion, de manière à transformer lesdites entailles formant amorces de rupture en interruptions séparant les tronçons.

D'autres aspects, buts et avantages de la présente invention apparaîtront mieux à la lecture de la description détaillée suivante de formes de réalisation préférées de celle-ci, donnée à titre d'exemple non limitatif et faite en référence aux dessins annexés, sur lesquels :
La figure 1 est une vue en coupe transversale d'un ruban selon une première forme de réalisation de l'invention,
La figure 2 est une vue en coupe longitudinale du ruban de la figure 1, montrant la ligne de coupe I-I utilisée pour la figure 1,
La figure 3 est une vue en coupe transversale d'un ruban selon une deuxième forme de réalisation de l'invention, et
La figure 4 est une vue en coupe longitudinale du ruban de la figure 1, montrant la ligne de coupe III-III utilisée pour la figure 3, et

Les figures 5A à 5C illustrent sous forme de coupes longitudinales les différentes étapes d'un exemple d'un procédé de fabrication d'un ruban selon l'invention.

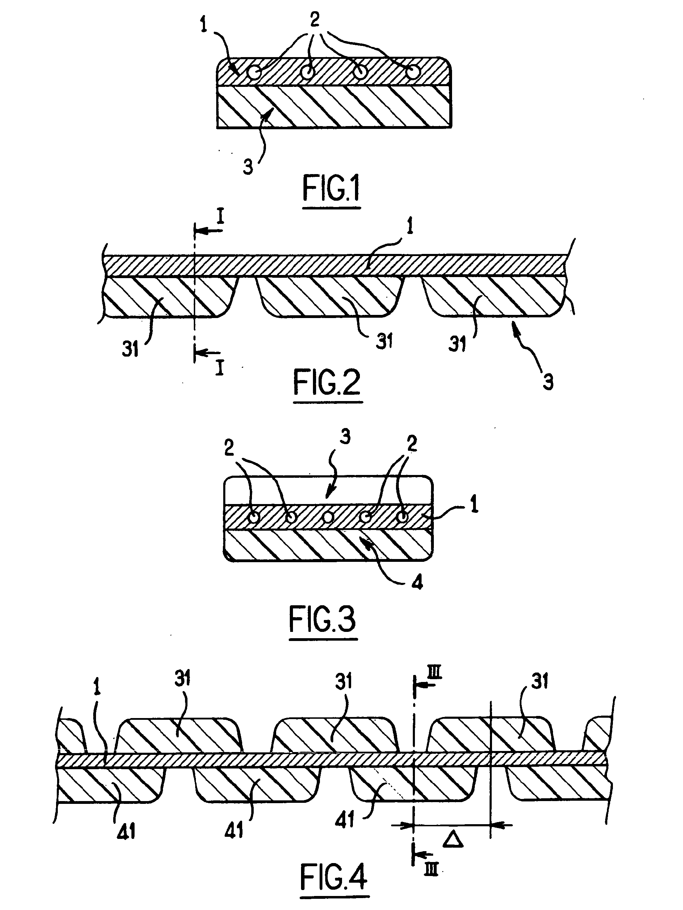

En référence tout d'abord aux figures 1 et 2, un ruban selon l'invention présente une section transversale globalement rectangulaire, dont la largeur (mesurée horizontalement sur la figure 1) est supérieure à l'épaisseur (mesurée verticalement sur cette même figure).

Le ruban présente ainsi une direction privilégiée de flexion, dans un plan longitudinal perpendiculaire à ses grandes faces.

Le ruban selon l'invention possède une bande formant support 3 présentant une aimantation permanente dans la direction de son épaisseur. Cette aimantation permanente peut être de même sens sur la totalité de la largeur, ce que l'on préfère dans le cas où cette largeur est relativement faible, par exemple de l'ordre de moins d'un millimètre à deux ou trois millimètres, mais elle peut également présenter des sens alternés de façon répartie sur la largeur, ce que l'on peut préférer pour des largeurs plus grandes.

Le ruban comprend également une pluralité d'organes 2 de transfert d'énergie noyés dans une masse commune 1 de matériau d'enrobage constituée par exemple de résine organique telle qu'une résine acrylique polymérisée aux ultraviolets.

L'énergie transférée au moyen des organes de transfert 2 peut être choisie dans un groupe comportant les énergies de nature lumineuse, électrique, pneumatique, hydraulique, funiculaire. Dans le présent exemple, il s'agit de fibres optiques.

Dans tous les cas, l'homme du métier peut choisir entre divers modes de réalisation pratique du ruban 1 qu'il a à sa disposition aux fins de lui assurer l'aimantation permanente recherchée.

La bande 3 est constituée par exemple par une matrice de caoutchouc Ethylène Propylène Diène (EPDM) dans laquelle sont noyés des grains de ferrite. Typiquement, on prévoit environ 90% en poids de ferrite pour assurer un niveau d'aimantation élevé.

Les organes 2 de transfert d'énergie tels que des fibres optiques peuvent être de réalisation conventionnelle, pour autant que leur flexion admissible soit compatible avec les applications envisagées du ruban.

Pour plus de détails quant aux réalisations possibles, on se reportera au document WO 2005/083724 A1 cité plus haut.

La figure 1 illustre le cas d'un ruban selon l'invention comportant quatre fibres optiques gainées 2 disposées côte à côte dans le matériau d'enrobage 1, associés à une bande aimantée 3 unique.

L'épaisseur du matériau d'enrobage 1 est choisie supérieure au diamètre extérieur de chacun des organes 2, afin de préserver la continuité de ce matériau 1 le long de la face du ruban opposée à la bande 3 ainsi que le long de la face du ruban du côté de la bande 3.

Selon un aspect essentiel de la présente invention, et comme le montre la figure 2. la bande support 3 est interrompue périodiquement de façon localisée, se composant ainsi d'une succession de tronçons magnétiques 31 séparés les uns des autres. La cohésion d'ensemble du ruban est dans ce cas assurée en partie par le matériau d'enrobage 1 lui-même, qui est alors choisi et dimensionné pour avoir les propriétés mécaniques souhaitées.

De la sorte, lorsqu'un phénomène de changement dimensionnel, temporaire ou permanent, intervient de façon relative entre la bande support 3 et le matériau d'enrobage 1, on génère entre les deux matériaux des forces de cisaillement qui sont insuffisantes pour aboutir à un décollement entre les deux. Typiquement, de telles contraintes peuvent provenir d'une réorganisation moléculaire conduisant à un rétreint lorsque le matériau EPDM est porté à des températures élevées, typiquement de 60 à 80°C..

En effet, à chaque interruption entre les tronçons individuels 31, de telles contraintes sont relâchées puisqu'il n'existe plus que le matériau d'enrobage 1, outre les organes 2 eux-mêmes.

Les figures 3 et 4 illustrent un deuxième forme de réalisation de l'invention où la bande support 3 est dédoublée en deux bandes support 3, 4 situées de part et d'autre du ruban de matériau d'enrobage 1 abritant les organes 2, ici au nombre de cinq.

De la même manière que précédemment, chaque bande support 3, 4 est interrompue pour former des tronçons individuels respectivement 31, 41. Avantageusement, ces interruptions sont décalées les unes par rapport aux autres d'une distance Δ (voir figure 4) de telle matière que les interruptions entre tronçons situés d'un côté ne coïncident pas avec les interruptions entre tronçons situés de l'autre côté, et préférentiellement qu'une interruption entre deux tronçons sur une bande se situe sensiblement au droit du milieu d'un tronçon, dans la direction longitudinale du ruban, de la bande côté opposé. De la sorte, on évite de conférer au ruban des points de fragilisation qui correspondrait à la présence du seul matériau d'enrobage 1, dans le cas où celui-ci ne présenterait pas toutes les propriétés mécaniques requises.

En outre, un tel agencement à double bande support permet d'améliorer le comportement du ruban, le niveau d'aimantation étant sensiblement le même sur ses deux faces.

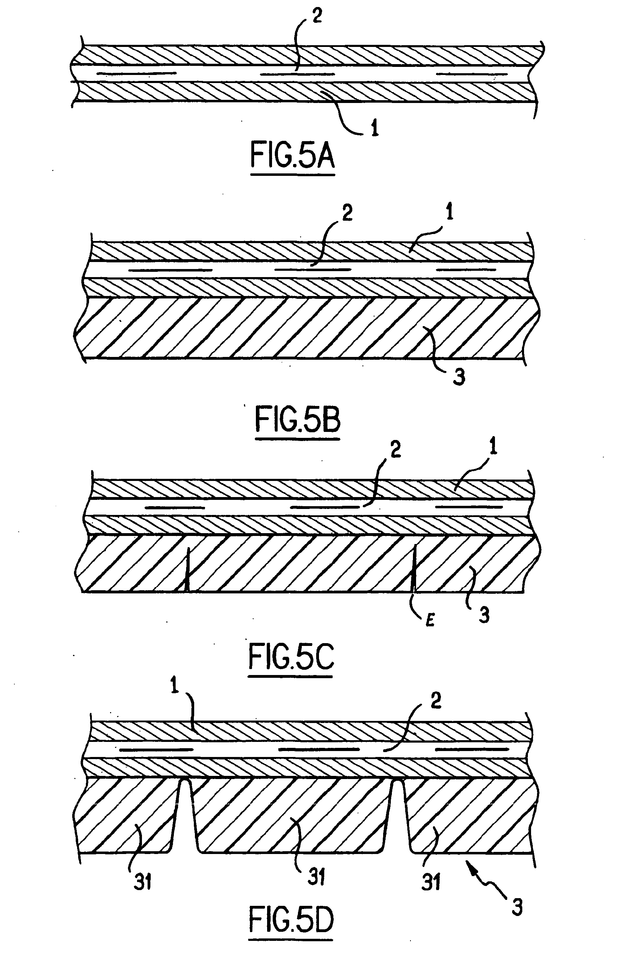

On va maintenant décrire en référence aux figures 5A à 5C un exemple de procédé de fabrication d'un ruban selon l'invention.

On prépare tout d'abord un ensemble d'organes 2 enrobés dans leur matériau d'enrobage 1 de manière à former un ruban (figure 5A).

On colle ensuite le long de ce ruban (soit directement, dans un état adhésif du matériau 1, soit à l'aide d'un adhésif distinct) une bande support aimantée continue 3, constituée comme on l'a vu plus haut d'EPDM chargé en grains de ferrite (figure 5B).

L'étape suivante consiste à utiliser un dispositif à couteaux ou analogue pour pratiquer des entailles E dans l'épaisseur de la bande 3, ou de préférence seulement dans une partie substantielle de son épaisseur de manière à ne pas risquer de blesser le matériau d'enrobage 1 abritant les organes 2 (figure 5C).

Ces entailles, qui créent autant d'amorces de rupture de la bande support, sont de préférence séparées d'une distance comprise entre 3 et 15 mm, plus préférentiellement autour de 4 à 7 mm. Elles sont ici espacées de 5 mm.

L'étape suivante consiste à exposer l'ensemble ainsi obtenu à une température de l'ordre de 60 à 80°C pendant une durée d'environ 2 à 4 heures, et en même temps à le soumettre à des contraintes de flexion voisines de celles que le ruban rencontrera en service, de manière à provoquer le rétreint de l'EPDM constituant la bande support 3. Ce rétreint peut atteindre environ 10%, et l'on comprend que les zones entaillées vont ainsi s'élargir, pour atteindre environ 0,5 mm de large, et ainsi bien séparer les tronçons individuels 31 de la bande (figure 5d).

Ce rétreint étant permanent, une exposition ultérieure du ruban, en cours d'utilisation, à des températures élevées, n'entraînera pas de sollicitations supérieures dans celui-ci, risquant d'amener un décollement de l'ensemble 1, 2 par rapport aux tronçons 31 formant ensemble la bande support.

Le procédé décrit ci-dessus peut être aisément transposé par l'homme du métier à la fabrication d'un ruban selon les figures 3 et 4.

Il est bien entendu que de nombreuses variantes peuvent également être envisagées sans que l'on sorte pour autant du cadre de la présente invention.

En particulier, on peut subdiviser la ou les bandes support en tronçons selon tous motifs, de façon régulière ou non, y compris dans la direction de la largeur du ruban lorsque la largeur de celui-ci est telle que des phénomènes de changement dimensionnel dans cette direction peuvent être gênants.

Par ailleurs, l'invention s'applique dès qu'une cause quelle qu'elle soit est susceptible d'induire des contraintes entre la bande support (ou les bandes support) et le matériau d'enrobage.

## Revendications

1. Ruban souple de transfert d'énergie, comprenant une bande aimantée (3) constituée par un matériau élastomère formant matrice dans laquelle sont noyées des particules lui communiquant une aimantation permanente orientée dans le sens de l'épaisseur de ladite bande, au moins un organe (2) de transfert d'énergie s'étendant le long de la bande aimantée (3), formant support, et un matériau d'enrobage (1) dans lequel le ou chaque organe de transfert d'énergie est noyé et adhérant à la bande aimantée, **caractérisé en ce que** la bande aimantée est subdivisée en tronçons successifs (31) de longueurs telles que des phénomènes de changement dimensionnel induits dans la bande aimantée notamment sous l'effet d'écarts de température induisent entre la bande aimantée et le matériau d'enrobage des contraintes suffisamment faibles pour éviter de fragiliser l'adhésion entre ladite bande aimantée et ledit matériau d'enrobage.

2. Ruban souple de transfert d'énergie, comprenant une bande aimantée (3) constituée par un matériau élastomère formant matrice dans laquelle sont noyées des particules lui communiquant une aimantation permanente orientée le sens de l'épaisseur de ladite bande, au moins un organe (2) de transfert d'énergie s'étendant le long de la bande aimantée formant support, et un matériau d'enrobage (1) dans lequel le ou chaque organe de transfert d'énergie est noyé et adhérant à la bande aimantée, **caractérisé en ce que** la bande aimantée est une bande aimantée continue (3) dans laquelle sont formées des amorces de rupture (E) espacées de distances telles que des phénomènes de changement dimensionnel induits dans la bande aimantée notamment sous l'effet d'écarts de température induisent entre la bande aimantée et le matériau d'enrobage des contraintes suffisamment fortes pour provoquer l'écartement de la bande aimantée au niveau desdites amorces de rupture et la formation de tronçons de bande (31), mais suffisamment faibles pour éviter de fragiliser l'adhésion entre ladite bande aimantée et ledit matériau d'enrobage.

3. Ruban souple selon la revendication 1 ou 2, **caractérisé en ce que** le matériau d'enrobage (1) est une résine organique.

4. Ruban selon l'une des revendications 1 à 3, **caractérisé en ce que** le matériau d'enrobage (1) adhère directement sur la bande aimantée.

5. Ruban selon l'une des revendications 1 à 3, **caractérisé en ce que** le matériau d'enrobage (1) est solidarisé à la bande aimantée à l'aide d'un adhésif.

6. Ruban selon l'une des revendications 1 à 5, **caractérisé en ce que** la bande aimantée (3) est constituée par une matrice de caoutchouc Ethylène Propylène Diène (EPDM) dans laquelle sont noyés des grains de ferrite.

7. Ruban selon l'une des revendications 1 à 6, **caractérisé en ce qu'**il comprend une bande aimantée (3, 4) de part et d'autre du matériau d'enrobage abritant le ou les organes de transfert.

8. Ruban selon la revendication 7, **caractérisé en ce que** les tronçons (31) d'une bande aimantée (3) sont décalés par rapport aux tronçons (41) de la bande aimantée opposée (3), de manière à ce que leurs interruptions mutuelles ne coïncident pas.

9. Ruban selon l'une des revendications 1 à 8, **caractérisé en ce que** les tronçons (31, 41) ont une longueur comprise entre environ 3 mm et environ 15 mm, préférentiellement entre environ 4 mm et environ 7 mm.

10. Procédé de fabrication d'un ruban souple de transfert d'énergie, **caractérisé en ce qu'**il comprend les étapes suivantes :
- prévoir une bande aimantée continue (3) constituée par un matériau élastomère formant matrice dans laquelle sont noyées des particules lui communiquant une aimantation permanente orientée dans le sens de l'épaisseur de ladite bande,
- fixer le long de ladite bande au moins un organe de transfert d'énergie (2) à l'aide d'un matériau d'enrobage (1) dans lequel le ou chaque organe de transfert d'énergie est noyé et adhérant à la bande aimantée,
- pratiquer dans ladite bande aimantée des entailles (E) formant amorces de rupture espacées de distances telles que des phénomènes de changement dimensionnel induits dans la bande aimantée notamment sous l'effet d'écarts de température induisent entre la bande aimantée et le matériau d'enrobage des contraintes suffisamment fortes pour provoquer la rupture de la bande au niveau desdites amorces de rupture et former des tronçons de bande (31), mais suffisamment faibles pour éviter de fragiliser l'adhésion entre ladite bande aimantée et ledit matériau d'enrobage.

11. Procédé selon la revendication 10, **caractérisé en ce que** le matériau d'enrobage (1) est une résine organique.

12. Procédé selon l'une des revendications 10 et 11, **caractérisé en ce que** le matériau d'enrobage (1) adhère directement sur la bande aimantée.

13. Procédé selon l'une des revendications 10 à 12, **caractérisé en ce que** le matériau d'enrobage (1) est solidarisé à la bande aimantée à l'aide d'un adhésif.

14. Procédé selon l'une des revendications 10 à 13, **caractérisé en ce que** la bande aimantée (3) est constituée par une matrice de caoutchouc Ethylène Propylène Diène (EPDM) dans laquelle sont noyés des grains de ferrite.

15. Procédé selon l'une des revendications 10 à 14, **caractérisé en ce qu'**il comprend également la fixation d'une autre bande aimantée (4) au matériau d'enrobage du côté opposé à la première bande aimantée, des entailles formant amorces de rupture étant également pratiquées dans ladite autre bande aimantée.

16. Procédé selon l'une des revendications 10 à 15, **caractérisé en ce que** les tronçons (31, 41) ont une longueur comprise entre environ 3 mm et environ 15 mm, préférentiellement entre environ 4 mm et environ 7 mm.

17. Procédé selon l'une des revendications 10 à 16, **caractérisé en ce qu'**il comprend une étape ultérieure consistant à exposer l'ensemble simultanément à une température conduisant à un phénomène de changement dimensionnel et à des contraintes de flexion, de manière à transformer lesdites entailles (E) formant amorces de rupture en interruptions séparant les tronçons (31 ; 31, 41).

## Claims

1. A flexible energy-transfer ribbon comprising a magnetized tape (3) formed with an elastomeric material forming a matrix in which are embedded particles which impart to it a permanent magnetism oriented in the direction of the thickness of said tape, at least one energy-transfer device (2) extending along the support-forming magnetized tape (3), and a coating material (1) in which the or each energy-transfer device is embedded and which adheres to the magnetized tape, **characterized in that** the magnetized tape is subdivided into successive sections (31) of such lengths that dimensional change phenomena induced in the magnetized tape, notably under the effect of temperature differences, induce sufficiently small stresses between the magnetized tape and the coating material for preventing weakening of the adhesion between said magnetized tape and said coating material.

2. A flexible energy-transfer ribbon, comprising a magnetized tape (3) formed with an elastomeric material forming a matrix in which are embedded particles that impart to it a permanent magnetism oriented in the direction of the thickness of said tape, at least one energy-transfer device (2) extending along the support-forming magnetized tape, and a coating material (1) in which the or each energy-transfer device is embedded and which adheres to the magnetized tape, **characterized in that** the magnetized tape is a continuous magnetized tape (3) in which are formed points of weakness (E) spaced at distances such that dimensional change phenomena induced in the magnetized tape, notably under the effect of temperature differences induce sufficiently strong stresses between the magnetized tape and the coating material for causing separation of the magnetized tape at said points of weakness and formation of tape sections (31), but which are sufficiently small for preventing weakening of the adhesion between said magnetized tape and said coating material.

3. The flexible ribbon according to claim 1 or 2, **characterized in that** the coating material (1) is an organic resin.

4. The ribbon according to any of claims 1 to 3, **characterized in that** the coating material (1) adheres directly to the magnetized tape.

5. The ribbon according to one of claims 1 to 3, **characterized in that** the coating material (1) is firmly attached to the magnetized tape by means of an adhesive.

6. The ribbon according to one of claims 1 to 5, **characterized in that** the magnetized tape (3) is formed with a matrix of ethylene propylene diene monomer (EPDM) rubber in which ferrite grains are embedded.

7. The ribbon according to one of claims 1 to 6, **characterized in that** it includes a magnetized tape (3, 4) on either side of the coating material enclosing the transfer device(s).

8. The ribbon according to claim 7, **characterized in that** the sections (31) of one magnetized tape (3) are offset relatively to the sections (41) of the opposite magnetized tape (3), so that their respective breaks do not coincide.

9. The ribbon according to any of claims 1 to 8, **characterized in that** the sections (31, 41) have a length comprised between about 3 mm and about 15 mm, and preferentially between about 4 mm and about 7 mm.

10. A method for manufacturing a flexible energy-transfer ribbon, **characterized in that** it comprises the following steps:
- providing a continuous magnetized tape (3) formed with an elastomeric material forming a matrix in which are embedded particles which impart to it a permanent magnetism oriented in the direction of the thickness of said tape,
- fixing along said tape at least one energy-transfer device (2) by means of a coating material (1) in which the or each energy-transfer device is embedded and which adheres to the magnetized tape,
- making in said magnetized tape notches (E) forming points of weakness spaced at distances such that dimensional change phenomena induced in the magnetized tape, notably under the effect of temperature differences, induce sufficiently strong stresses between the magnetized tape and the coating material for causing rupture of the tape at said points of weakness and formation of tape sections (31), but which are sufficiently small for preventing weakening of the adhesion between said magnetized tape and said coating material.

11. The method according to claim 10, **characterized in that** the coating material (1) is an organic resin.

12. The method according to either of claims 10 and 11, **characterized in that** the coating material (1) directly adheres to the magnetized tape.

13. The method according to any of claims 10 to 12, **characterized in that** the coating material (1) is firmly attached to the magnetized tape by means of an adhesive.

14. The method according to one of claims 10 to 13, **characterized in that** the magnetized tape (3) is formed with a matrix of ethylene propylene diene monomer (EPDM) rubber in which ferrite grains are embedded.

15. The method according to any of claims 10 to 14, **characterized in that** it also comprises the fixing of another magnetized tape (4) to the coating material, on the side opposite to the first magnetized tape, with notches forming points of weakness also being made in said other magnetized tape.

16. The method according to any of claims 10 to 15, **characterized in that** the sections (31, 41) have a length comprised between about 3 mm and about 15 mm, and preferentially between about 4 mm and about 7 mm.

17. The method according to any of claims 10 to 16, **characterized in that** it comprises a subsequent step that consists of exposing the assembly simultaneously to a temperature leading to a dimensional-change phenomenon and to flexural stresses, so as to convert said notches (E) forming points of weakness into breaks separating the sections (31; 31, 41).

## Patentansprüche

1. Flexibles Energieübertragungsband, umfassend ein Magnetband (3), das aus einem elastomeren Material gebildet ist, das eine Matrix bildet, in die Partikel versenkt sind, die ihm eine Dauermagnetisierung verleihen, die in der Richtung der Dicke des Bandes orientiert ist, wobei wenigstens ein Energieübertragungsmittel (2) sich entlang dem einen Träger bildenden Magnetband (3) erstreckt, sowie ein Ummantelungsmaterial (1), in das das oder jedes Energieübertragungsmittel versenkt ist und das am Magnetband haftet, **dadurch gekennzeichnet, dass** das Magnetband in aufeinanderfolgende Abschnitte (31) unterteilt ist, so dass Phänomene der Ausdehnungsänderung, die in dem Magnetband, insbesondere unter dem Einfluss von Temperaturunterschieden zwischen dem Magnetband und dem Ummantelungsmaterial bewirkt werden, ausreichend schwache Beanspruchungen bewirken, um zu vermeiden, das Haften zwischen dem Magnetband und dem Ummantelungsmaterial zu schwächen.

2. Flexibles Energieübertragungsband, umfassend ein Magnetband (3), das aus einem elastomeren Material gebildet ist, das eine Matrix bildet, in die Partikel versenkt sind, die ihm eine Dauermagnetisierung verleihen, die in der Richtung der Dicke des Bandes orientiert ist, wobei wenigstens ein Energieübertragungsmittel (2) sich entlang dem einen Träger bildenden Magnetband erstreckt, sowie ein Ummantelungsmaterial (1), in das das oder jedes Energieübertragungsmittel versenkt ist und das am Magnetband haftet, **dadurch gekennzeichnet, dass** das Magnetband ein durchgängiges Magnetband (3) ist, in dem Ausgangspunkte für Brüche (E) gebildet sind, die derart beabstandet sind, dass Phänomene der Ausdehnungsänderung, die in dem Magnetband, insbesondere unter dem Einfluss von Temperaturunterschieden, bewirkt werden, zwischen dem Magnetband und dem Ummantelungsmaterial ausreichend starke Beanspruchungen zu bewirken, um die Trennung des Magnetbandes auf Höhe der Ausgangspunkte für Brüche und die Bildung von Bandabschnitten (31) herbeizuführen, aber ausreichend schwach sind, um zu vermeiden, das Haften zwischen dem Magnetband und dem Ummantelungsmaterial zu schwächen.

3. Flexibles Band gemäß Anspruch 1 oder 2, **dadurch gekennzeichnet, dass** das Ummantelungsmaterial (1) ein organisches Harz ist.

4. Flexibles Band gemäß einem der Ansprüche 1 bis 3, **dadurch gekennzeichnet, dass** das Ummantelungsmaterial (1) direkt auf dem Magnetband haftet.

5. Flexibles Band gemäß einem der Ansprüche 1 bis 3, **dadurch gekennzeichnet, dass** das Ummantelungsmaterial (1) mit dem Magnetband mit Hilfe eines Klebers fest verbunden ist.

6. Flexibles Band gemäß einem der Ansprüche 1 bis 5, **dadurch gekennzeichnet, dass** das Magnetband (3) aus einer Matrix aus Ethylen-Propylen-Dien-Kautschuk (EPDM) gebildet ist, in die Ferritkörner versenkt sind.

7. Flexibles Band gemäß einem der Ansprüche 1 bis 6, **dadurch gekennzeichnet, dass** es ein Magnetband (3, 4) auf beiden Seiten des Ummantelungsmaterials umfasst, das das oder die Übertragungsmittel schützt.

8. Flexibles Band gemäß Anspruch 7, **dadurch gekennzeichnet, dass** die Abschnitte (31) eines Magnetbandes (3) bezüglich der Abstände (41) des gegenüberliegenden Magnetbandes (3) versetzt sind, so dass ihre beiderseitigen Unterbrechungen nicht zusammentreffen.

9. Flexibles Band gemäß einem der Ansprüche 1 bis 8, **dadurch gekennzeichnet, dass** die Abschnitte (31, 41) eine Länge zwischen 3 mm und ungefähr 15 mm aufweisen, vorzugsweise zwischen ungefähr 4 mm und ungefähr 7 mm.

10. Verfahren zur Herstellung eines flexiblen Energieübertragungsbandes, **dadurch gekennzeichnet, dass** es die folgenden Schritte umfasst:
- Bereitstellen eines durchgängigen Magnetbandes (3), das aus einem elastomeren, eine Matrix bildendem Material gebildet ist, in dem Partikel versenkt sind, die ihm eine Dauermagnetisierung verleihen, die in der Richtung der Dicke des Bandes orientiert ist,
- Befestigen entlang des Bandes wenigstens eines Energieübertragungsmittels (2) mit Hilfe eines Ummantelungsmaterials (1), in dem das oder jedes Energieübertragungsmaterial versenkt ist und am Magnetband haftet,
- Anbringen in dem Magnetband von Einkerbungen (E), die Ausgangspunkte für Brüche bilden, die derart beabstandet sind, dass Phänomene der Ausdehnungsänderung, die in dem Magnetband, insbesondere unter dem Einfluss von Temperaturunterschieden, bewirkt werden, zwischen dem Magnetband und dem Ummantelungsmaterial ausreichend starke Beanspruchungen bewirken, um den Bruch des Bandes auf Höhe der Ausgangspunkte für Brüche herbeizuführen und Bandabschnitte (31) zu bilden, aber ausreichend schwach sind, um zu vermeiden, das Haften zwischen dem Magnetband und dem Ummantelungsmaterial zu schwächen.

11. Verfahren gemäß Anspruch 10, **dadurch gekennzeichnet, dass** das Ummantelungsmaterial (1) ein organisches Harz ist.

12. Verfahren gemäß einem der Ansprüche 10 und 11, **dadurch gekennzeichnet, dass** das Ummantelungsmaterial (1) direkt auf dem Magnetband haftet.

13. Verfahren gemäß einem der Ansprüche 10 bis 12, **dadurch gekennzeichnet, dass** das Ummantelungsmaterial (1) mit dem Magnetband mit Hilfe eines Klebers fest verbunden ist.

14. Verfahren gemäß einem der Ansprüche 10 bis 13, **dadurch gekennzeichnet, dass** das Magnetband (3) aus einer Matrix aus Ethylen-Propylen-Dien-Kautschuk (EPDM) gebildet ist, in die Ferritkörner versenkt sind.

15. Verfahren gemäß einem der Ansprüche 10 bis 14, **dadurch gekennzeichnet, dass** es auch umfasst die Befestigung eines weiteren Magnetbandes (4) am Ummantelungsmaterial auf der dem ersten Magnetband gegenüberliegenden Seite, wobei Einkerbungen, die Ausgangspunkte für Brüche bilden, auch in dem anderen Magnetband angebracht sind.

16. Verfahren gemäß einem der Ansprüche 10 bis 15, **dadurch gekennzeichnet, dass** die Abschnitte (31, 41) eine Länge zwischen ungefähr 3 mm und ungefähr 15 mm aufweisen, vorzugsweise zwischen ungefähr 4 mm und ungefähr 7 mm.

17. Verfahren gemäß einem der Ansprüche 10 bis 16, **dadurch gekennzeichnet, dass** es einen weiteren Schritt umfasst, der darin besteht, die Konstruktion gleichzeitig einer Temperatur auszusetzen, die zu einem Phänomen der Ausdehnungsänderung und zu Biegebeanspruchungen führt, um die Kerben (E), die Ausgangspunkte für Brüche bilden, in Unterbrechungen umzuwandeln, die die Abschnitte (31; 31, 41) trennen.
